# EUROPEAN PATENT APPLICATION

(11) **EP 4 361 764 A1**
(43) Date of publication of application: **01.05.2024**
(21) Application number: 23195825.7
(22) Date of filing: 06.09.2023
(51) Int. Cl.: G06F 1/16, H04M 1/02

(54) **HINGE FOR A FOLDABLE ELECTRONIC DEVICE AND RELATED METHODS**

(30) Priority: 28.10.2022 WO PCT/CN2022/128286; 29.11.2022 US 202218071317
(71) Applicant: Intel Corporation, Santa Clara, CA 95054 (US)
(72) Inventor: HSU, Tsung-Hsing, Hillsboro, 97123 (US); BAI, Chunlin, ChengDu, 610017 (CN); MISHRA, Surya Pratap, 97229, Portland (US); MASLOV, Jordan, Portland, 97210 (US); GHOSH, Prosenjit, Portland, 97229 (US); YODER, James M., Beaverton, 97007 (US)
(74) Representative: Rummler, Felix

(57) **Abstract**

Methods, apparatus, systems, and articles of manufacture related to foldable electronic devices are disclosed herein. An example apparatus disclosed herein includes a gear set, a first pair of rotational arms coupled to the gear set, and a first guide set carried by the first pair of rotational arms and couplable to a display of the electronic device, the first guide set having a first guide on a first side of the gear set and a second guide on a second side of the gear set, the second side opposite the first side, wherein the gear set is to rotate the first pair of rotational arms to move the electronic device between an opened orientation and a closed orientation, the first pair of rotational arms to bring the first guide of the first guide set into proximity with the second guide of the first guide set in the closed orientation to cause the display to have a waterdrop cross-sectional shape in the closed orientation.

## Description

### RELATED APPLICATION

This patent claims priority from International Application Number PCT/CN2022/128286, which was filed on October 28, 2022, and is hereby incorporated by reference in its entirety.

### FIELD OF THE DISCLOSURE

This disclosure relates generally to foldable electronic devices and, more particularly, to a hinge for a foldable electronic device.

### BACKGROUND

Foldable electronic devices typically rotate about a hinge to transition from an opened orientation to a closed orientation, and vice versa. Some foldable electronic devices include a foldable organic light-emitting diode (FOLED) display panel that is typically bent when the electronic device is folded about the hinge.

### BRIEF DESCRIPTION OF THE DRAWINGS

FIG. 1 is an isometric view of an example hinge for a foldable electronic device.
FIG. 2 shows an alternative configuration for the example hinge of FIG. 1.
FIG. 3 is an exploded view of the example hinge of FIG. 1.
FIG. 4 is an exploded view of the example hinge of FIG. 2
FIG. 5 is an isometric view of the example hinge of FIG. 1 in a closed orientation.
FIG. 6 is a front-view of the example hinge of FIG. 1 in an opened orientation.
FIG. 7 is a front view of the example hinge of FIG. 1 in the closed orientation.
FIG. 8 is a detailed view of an example gear set of the example hinges of FIGS. 1 and/or 2.
FIG. 9 is a cross-sectional view of the example hinge of FIG. 5 and 7, taken about the A-A line of FIG. 5.
FIG. 10 is a close-up view of an example sliding mechanism used on the example hinges of FIGS. 1 and/or 2.
FIG. 11 and FIG. 12 show the sliding mechanism of FIG. 10 in the opened orientation and the closed orientation, respectively, while attached to half of the example hinge of FIG. 1.
FIG. 13 shows an example configuration using more than one example hinge of FIG. 1.
FIG. 14 and FIG. 15 show an example electronic device hinge assembly distributed across a width of example extensions guides of an example electronic device in the opened orientation and closed orientation respectively.
FIG. 16 and FIG. 17 show cross-sectional views of an assembled example electronic device using the example hinge of FIG. 1in the opened orientation and the closed orientation, respectively.
FIG. 18 shows a portion of an example electronic device with an alternative example electronic device hinge assembly.

In general, the same reference numbers will be used throughout the drawing(s) and accompanying written description to refer to the same or like parts. The figures are not to scale.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified in the below description.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

### DETAILED DESCRIPTION

Some foldable portable personal computers have FOLED display panels with a wide bend radius, which results in a U-shaped system when in a closed orientation. The wide bend radius presents a gap in the device at the center point when the device is in a folded configuration. The gap increases the thickness of the device, which is undesirable to some end-users. Decreasing the bend radius of the FOLED display panels reduces the gap but also increases local stress on the FOLED display panel. The increased stress may form a permanent crease in the FOLED display panel.

Additionally, some existing hinges contain a very large number of parts (e.g., more than 130 components on one hinge for some applications) that complicate devices containing such hinges and increase the likelihood of failure due to the complexity and difficulty in manufacturing a small, complex components. Examples disclosed herein include foldable electronic devices (e.g., laptops) with example hinges of relatively simpler designs and that provide adequate torque performance given the increased weight of laptops as compared to smaller electronic devices.

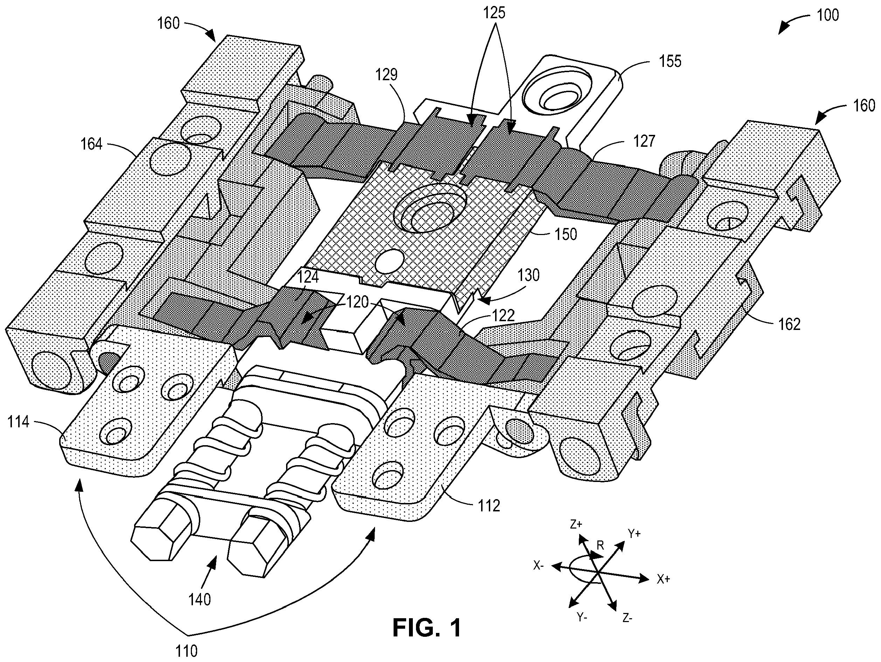

FIG. 1 is an isometric view of an example hinge 100 for a foldable electronic device. The example hinge of the illustrated example of FIG. 1 includes a first guide set 110, a first pair of rotational arms 120, a gear set 130 (hidden in FIG. 1), and a torque mechanism 140. As denoted by the axis system, "X" denotes an x-axis, where a positive direction is represented as "X+" and a negative direction is represented as "X-", "Y" denotes a y-axis, where a proximal direction of the x-axis is represented as "Y+" and a distal direction of the x-axis is represented as "Y-", "Z" denotes a z-axis, where an upward direction is represented as "Z+" and a downward direction is represented as a "Z-", and "R" denotes a rotational direction about the Y axis.

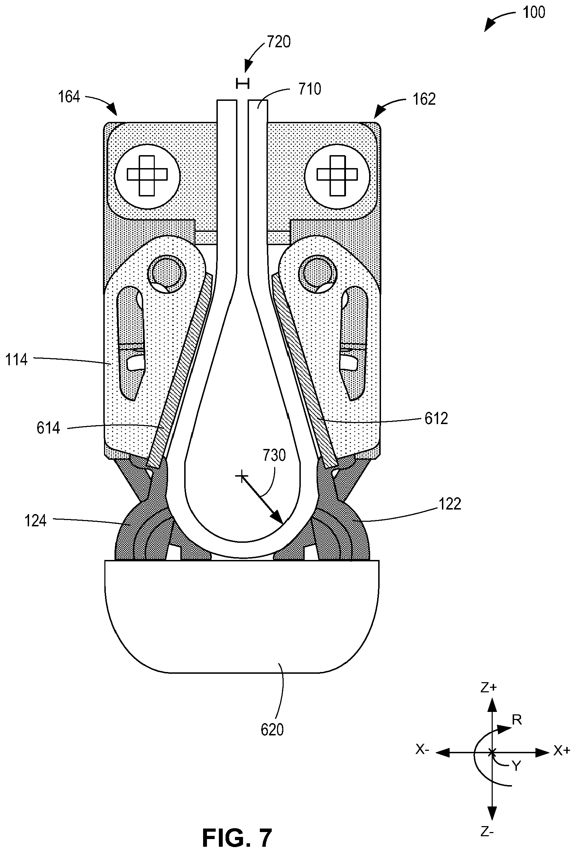

The first guide set 110 is couplable to a display of the foldable electronic device (e.g., a display 710) and to the first pair of rotational arms 120. The first guide set 110 guides the display 710 into a desired position when the hinge 100 is used to open or close the foldable electronic device. In some examples, the first guide set 110 has a first guide 112 and a second guide 114. The first guide 112 is on one side of the y-axis (e.g., on the positive x-axis side) on the proximal side of the hinge 100. The second guide 114 is on the opposite side of the first guide 112 (e.g., on the negative x-axis side) on the proximal side of the hinge 100. In some examples, the first guide set 110 implements means for guiding the display 710 between a folded position (e.g., a closed orientation) and an opened position (e.g., an opened orientation). In the folded position, the display 710 has a waterdrop cross-sectional shape (see FIG. 7).

The first pair of rotational arms 120 is couplable to the first guide set 110 and rotates along the rotational direction to bring the first guide 112 into proximity with the second guide 114, and therefore fold the display 710. In some examples, the first pair of rotational arms 120 includes a first arm 122 and a second arm 124. The first arm 122 is on one side of the y-axis (e.g., on the positive x-axis side) on the proximal side of the hinge 100 and coupled to the first guide 112. The first arm 122 rotates along the rotational direction in a negative, counterclockwise direction. The second arm 124 is on the opposite side of the first arm 122 (e.g., on the negative x-axis side) on the proximal side of the hinge 100 and coupled to the second guide 114. The second arm 124 rotates along the rotational direction in a positive, clockwise direction. In some examples, the first pair of rotational arms 120 implements means for carrying the first guide 112 into proximity with the second guide 114.

In some examples, the hinge 100 includes a second pair of rotational arms 125. The second pair of rotational arms 125 rotates along the rotational direction and includes a third arm 127 and a fourth arm 129. The third arm 127 is on one side of the y-axis (e.g., on the positive x-axis side), which is the same side as the first arm 122. The third arm 127 is on the distal side of the hinge 100. The third arm 127 rotates along the rotational direction in the negative, counterclockwise direction. The fourth arm 129 is on the opposite side of the third arm 127 (e.g., on the negative x-axis side), which is on the same side as the second arm 124). The fourth arm is on the distal side of the hinge 100. The fourth arm 129 rotates along the rotational direction in the positive, clockwise direction.

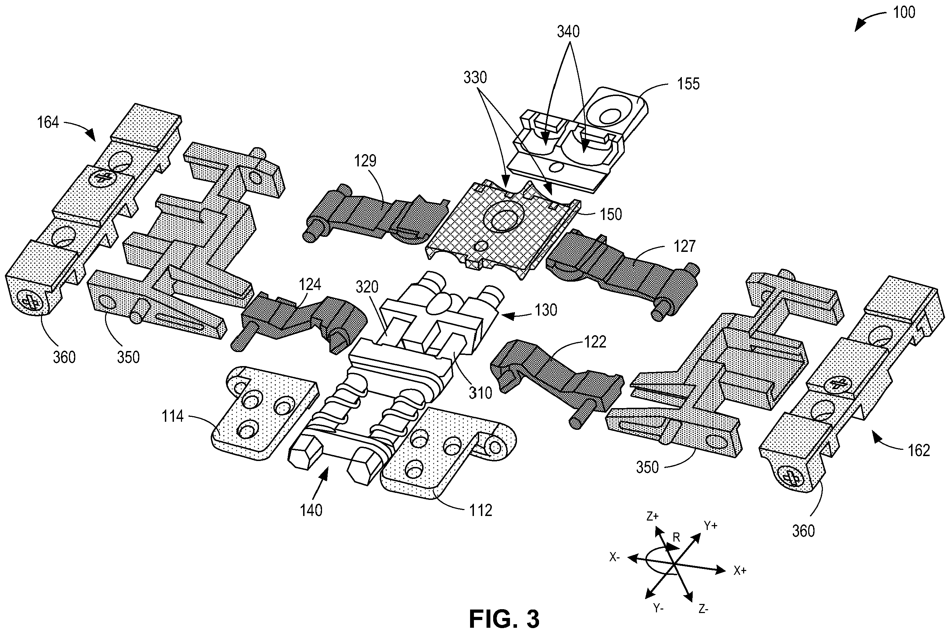

The gear set 130 is coupled to the first pair of rotational arms 120. The gear set 130 rotates the first pair of rotational arms 120 and the second pair of rotational arms 125 along the rotational direction (see also FIGS. 3, 4, and/or 8). It can also be described as when the user opens or closes the electronic device in which the hinge 100 is disposed, the opening/closing moves the first pair of rotational arms 120, which rotates the gear set 130. The rotational motion of the second pair of rotational arms 125 results from the rotational motion of the first pair of rotational arms 120. In some examples, the gear set 130 includes a helix gear assembly. In other examples, other suitable gear assemblies can be used such as, for example, a spur gear assembly, a bevel gear assembly, etc. The gear set 130 provides a mechanism to guide the rotation of the first pair of rotational arms 120 and the second pair of rotational arms 125 along the rotational direction. In some examples, the gear set implements means for rotating the first pair of rotational arms 120 and/or the second pair of rotational arms 125 along the rotational direction.

The torque mechanism 140 provides a torque to the gear set 130 to control the motion of the first pair of rotational arms 120 and the second pair of rotational arms 125. The torque force provided by the torque mechanism 140 helps maintain the electronic device in the opened orientation by, for example, holding the hinge 100 in the open orientation when the electronic device is in use to prevent the display 710 from falling toward the closed orientation (e.g., with half of the display 710 folded over onto the other half of the display 710). In some examples, an amount of torque force provided by the torque mechanism 140 is based on a weight of the electronic device or a portion of the electronic device. For example, a larger or heavier electronic device (e.g., a large-screen laptop) may require a larger torque than a smaller or lighter electronic device (e.g., a foldable tablet) to hold the electronic device in an open position.

In some examples, the torque mechanism 140 includes one or more torque hinge devices such as, for example, detent hinges, adjustable torque hinges, bi-directional torque hinges, etc. In some examples, the torque mechanism 140 implements means for stopping the rotation of the first pair of rotational arms 120 and/or the second pair of rotational arms 125 passively (e.g., without outside interference).

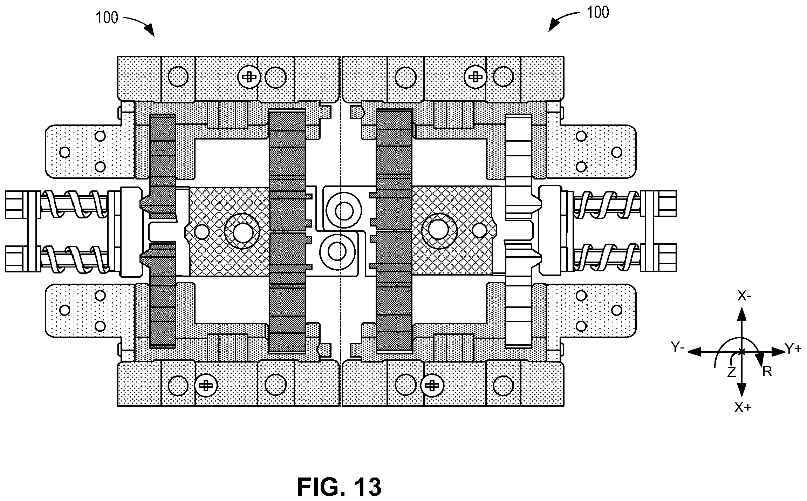

In some examples, the example hinge may also include a gear cover 150 and a distal structure member 155. The gear cover 150 provides a protective shielding to the gear set. The distal structure member provides a connection point for the second pair of rotational arms 125. In some examples, the second pair of rotational arms 125 is coupled to openings in the distal end of the gear cover 150 and the proximal end of the distal structure member 155. In some examples, as discussed below in reference to FIG. 13, more than one hinge 100 can be used in the electronic device. In such an example, the distal structure member 155 provides a connection point to connect the hinges together. In some examples, the distal structure member 155 implements means for connecting more than one hinge 100 together.

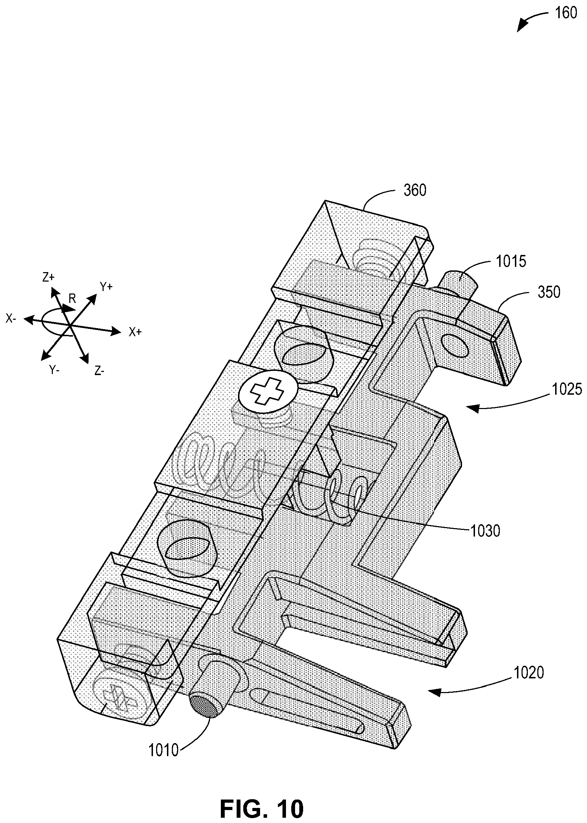

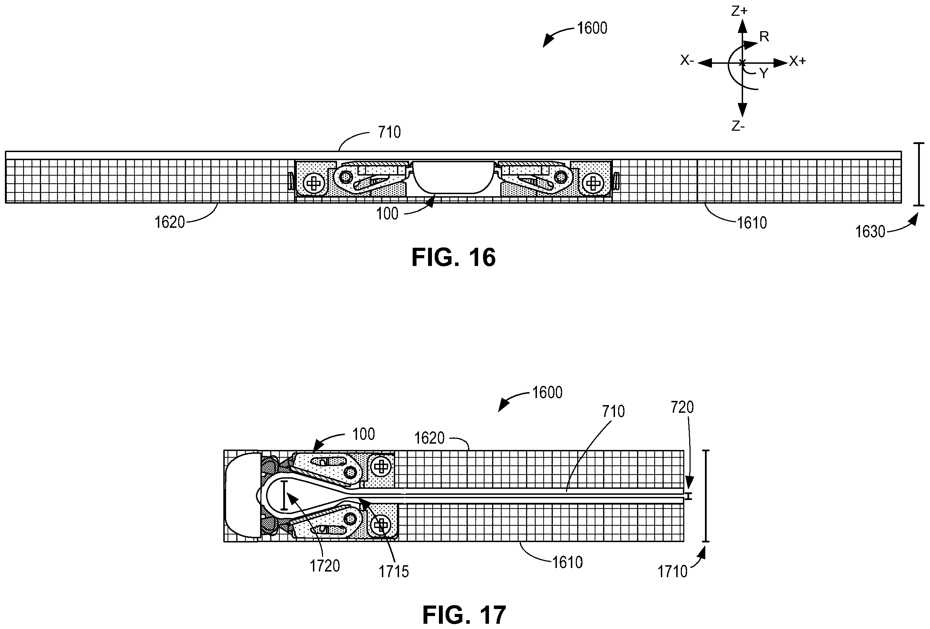

In some examples, the hinge 100 includes a sliding mechanism 160 for adjusting a force applied to the display 710. In the examples disclosed herein, the sliding mechanism 160 is coupled to a chassis of the electronic device (e.g., see FIG. 16 showing a first housing 1610 and a second housing 1620, collectively the chassis). The sliding mechanism provides relative motion between the hinge 100 and the chassis. In some examples, a tensile force is applied to the display 710 when the electronic device is in the opened orientation to prevent a crease line from appearing on the display 710. The sliding mechanism 160 includes a spring (e.g., a spring 1030) for adjusting an amount of force and the direction of the force applied to the display 710 in the opened orientation and the closed orientation. In some examples, the first pair of rotational arms 120 is coupled to the sliding mechanism 160, where there is one sliding mechanism 160 on the positive x-axis side (e.g., a positive axis sliding mechanism 162) and one sliding mechanism 160 on the negative x-axis side (e.g., a negative axis sliding mechanism 164). In some examples, the second pair of rotational arms 125 also couples to the sliding mechanism 160. The first arm 122 and the third arm 127 couple to the positive axis sliding mechanism 162, and the second arm 124 and the fourth arm 129 couple to the negative axis sliding mechanism 164. Further information regarding the sliding mechanism 160 is discussed below in reference to FIGS. 10, 11, and/or 12. In some examples, the sliding mechanism 160 implements means for changing a force to the display of the electronic device as the display is guided between the opened orientation and the closed orientation.

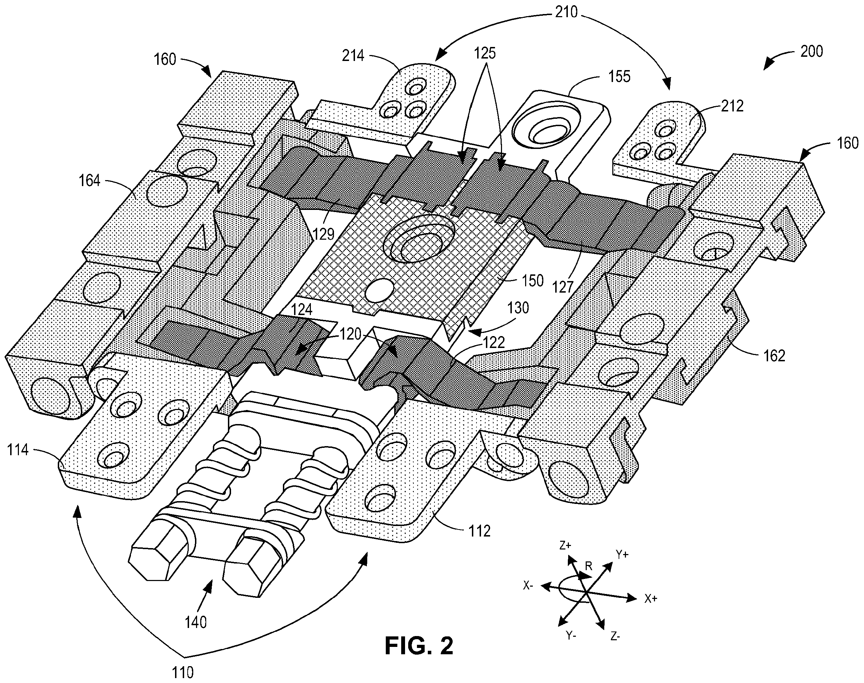

FIG. 2 show an alternative configuration for the hinge 200 of FIG. 1. The hinge 200 of FIG. 2 includes a second guide set 210 on the distal end of the hinge 200 that is couplable to the second pair of rotational arms 125. The second guide set 210 aids the first guide set 110 in guiding the display 710 into the desired position when the hinge 200 is used to open or close the foldable electronic device. In some examples, the second guide set includes a third guide 212 and a fourth guide 214. The third guide 212 is on one side of the y-axis (e.g., on the positive x-axis side) on the distal side of the hinge 200 (e.g., on the positive y-axis side) and coupled to the third arm 127. The fourth guide 214 is on the opposite side of the third guide 212 (e.g., on the negative x-axis side) on the distal side of the hinge 200 and coupled to the fourth arm 129. In some examples, the second guide set 210 implements means for guiding the display 710 into a folded position and an opened position, where the folded position is a waterdrop cross-sectional shape. Though the hinge 200 of FIG. 2 differs from the hinge 100 of FIG. 1 by the second guide set 210, details of the hinge 100 disclosed herein can apply to the hinge 200 of FIG. 2.

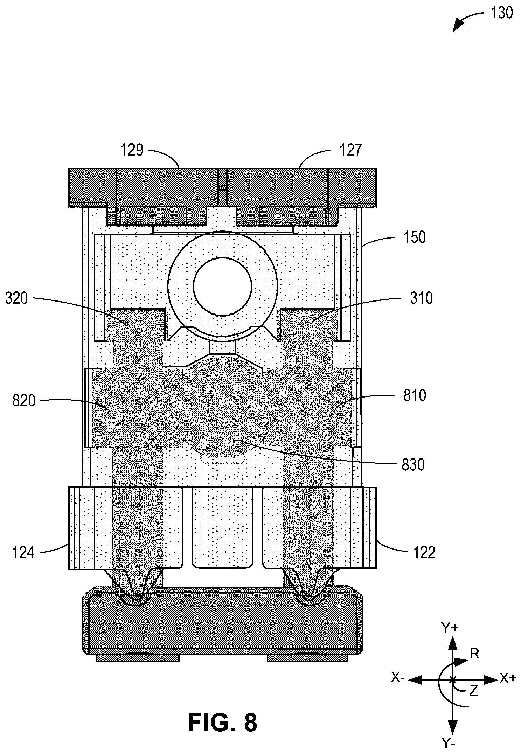

FIG. 3 is an exploded view of the example hinge 100 of FIG. 1. As shown in the illustrated example of FIG. 3, the gear set 130 includes a first gear rod 310 and a second gear rod 320. The first gear rod 310 is on the positive x-axis side of the hinge 100, and the second gear rod is on the negative x-axis side of the hinge 100, opposite of the first gear rod 310. In some examples, the first and second gear rod 310, 320 operably connect the torque mechanism 140 to the gear set 130. The gear set 130 is further described below in reference to FIG. 8.

In some examples, the gear cover 150 and the distal structure member 155 of the illustrated example of FIG. 3 includes gear cover arm cavity 330 and a distal arm supporting cavity 340, respectively. When the hinge 100 is assembled, the gear cover arm cavity 330 and the distal arm supporting cavity 340 form a space for the second pair of rotational arms 125 to couple to the hinge 100.

In the illustrated example of FIG. 3, the sliding mechanism 160 (e.g., the positive axis sliding mechanism 162 and the negative axis sliding mechanism 164) includes a hinge connection component 350 and a chassis connection component 360. The hinge connection component 350 couples to the first pair of rotational arms 120 and the second pair of rotational arms 125 on both sides of the hinge 100. On one side of the hinge 100, the chassis connection component 360 (e.g., on the positive x-axis side of the hinge 100) couples to the chassis of the electronic device (e.g., the first housing 1610). On the other side of the hinge 100, the chassis connection component 360 (e.g., on the negative x-axis side of the hinge 100) couples to the chassis of the electronic device (e.g., the second housing 1620).

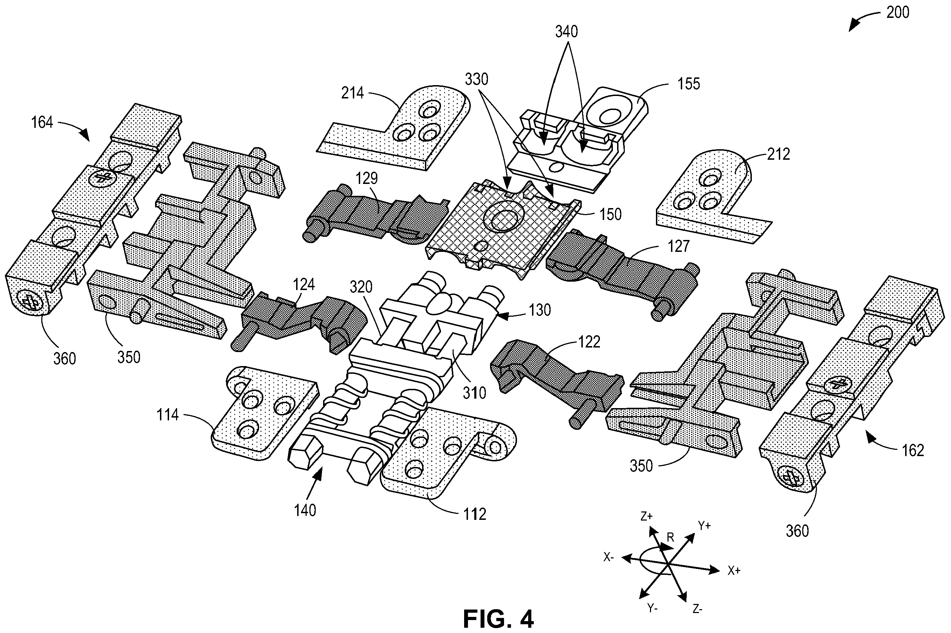

FIG. 4 shows an exploded view of the alternate configuration of the example hinge 200 of FIG. 2. As illustrated in FIG. 2, the alternate configuration of the example hinge 200 includes the third guide 212 and the fourth guide 214, which couple to the second pair of rotational arms 125. The hinge 200 also includes the first gear rod 310, the second gear rod 320, the gear cover arm cavity 330, the distal arm supporting cavity 340, the hinge connection component 350, and the chassis connection component 360 as disclosed herein.

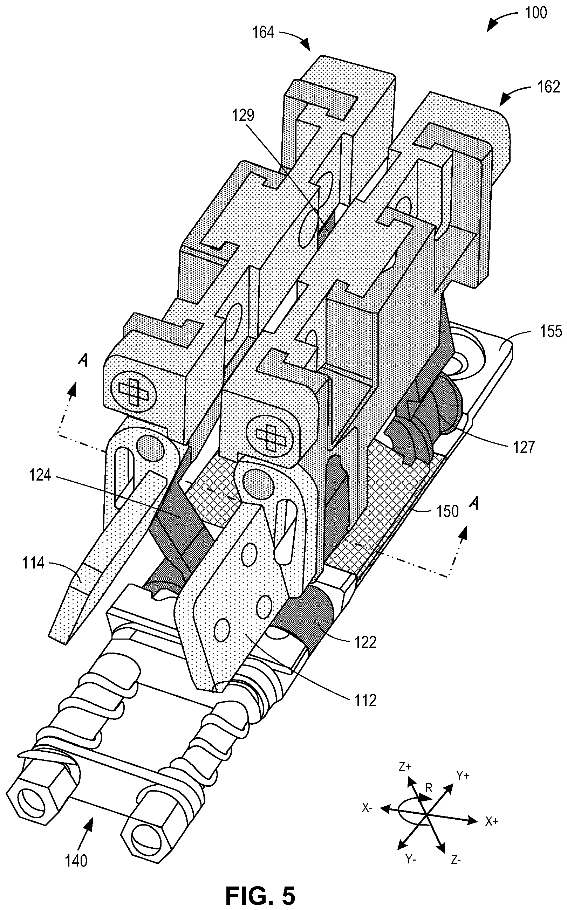

FIG. 5 is an isometric view of the hinge 100 in a closed orientation. As shown in the illustrated example of FIG. 5, the first guide 112, the first arm 122, the third arm 127, and the positive axis sliding mechanism 162 are rotated in the counter-clockwise direction along the rotational direction. The second guide 114, the second arm 124, the fourth arm 129, and the negative axis sliding mechanism 164 are rotated in the clockwise direction along the rotational direction. Thus, the first arm 122, the third arm 127, and the positive axis sliding mechanism 162 are carried into proximity with the second guide 114, the second arm 124, the fourth arm 129, and the negative axis sliding mechanism 164. As mentioned above, the hinge 200 of FIG. 2 includes the third guide 212 and the fourth guide 214. In such an example, the third guide 212, attached to the third arm 127, is rotated in the counter-clockwise direction along the rotational direction, and the fourth guide 214, attached to the fourth arm 129, is rotated in the clockwise direction along the rotational direction. Thus, the third guide 212 is carried into proximity with the fourth guide 214 in such an example.

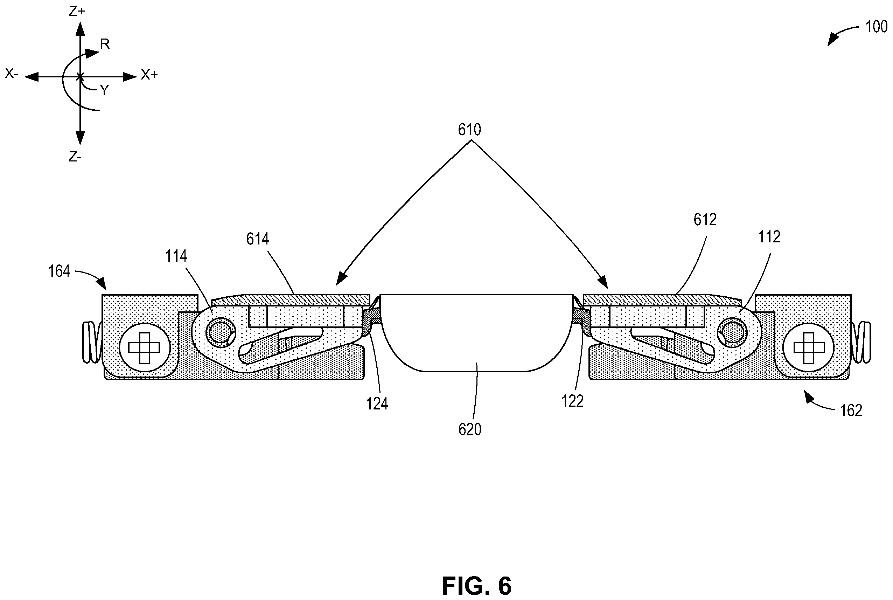

FIG. 6 is a front view (e.g., looking distally down the y-axis towards the positive y-axis direction) of the example hinge 100 of FIG. 1 in the opened orientation. As illustrated in FIG. 6, the hinge 100 may include an extension guide 610 for aiding the guide set 110 in folding the display 710. In some examples, the extension guide 610 extends along a width (e.g., along the y-axis) of the electronic device and includes a first extension guide 612 and a second extension guide 614.

The first extension guide 612 is on the positive x-axis side of the electronic device and couplable to the first guide 112. In some examples, the first extension guide 612 is also couplable to the third guide 212. The second extension guide 614 is on the negative x-axis side of the electronic device and couplable to the second guide 114. In some examples, the second extension guide 614 is also couplable to the fourth guide 214.

In some examples, the hinge 100 includes a casing 620 for housing components internal to the hinge 100. Such internal components may include the gear set 130, the torque mechanism 140, the gear cover 150, and/or the distal structure member 155. The casing 620 may be used to prevent damage to the internal components that can occur, such as dust accumulation, water damage, impact damage to the gear set 130, etc.

FIG. 7 is a front-view of the example hinge 100 of FIG. 6 in the closed orientation. As illustrated in FIG. 7, the hinge 100 is coupled to the display 710 via the first and second extension guides 612, 614. The display 710, in some examples is a FOLED display, which is bendable as shown in FIG. 7. When the electronic device is in the closed orientation, the guide set 110 (e.g., the first guide 112 and the second guide 114) guide the display 710 to be a waterdrop cross-sectional shape. Creating a waterdrop shape reduces localized stress on the display 710 by folding the display 710 into a more natural and less extreme shape (e.g., as opposed to a c-shaped cross-section or a v-shaped cross section where the stresses on the display are increased).

Additionally, creating a waterdrop shape allows for a display separation distance 720 to be substantially uniform and negligible (in some examples, about zero across the entire depth (x-axis direction) of the electronic device up to the point the display is shaped as the waterdrop). In current systems that use the c-shaped cross-section, the separation distance is different at a fold point than at an end point (e.g., where the ends of the display 710 come together) and at all points along the display therebetween due to the c-shape cross-section. This creates an undesirable gap in the system as described above. Therefore, utilizing a waterdrop cross-section eliminates the system gap at the fold point and creates the uniform separation distance 720 across the depth of the fold. The display 710 does include a radius 730 at the fold point within the hinge 100, but the waterdrop shape eliminates the gap in the system by allowing opposite halves of the display 710 to come together at the top of the waterdrop (e.g., the positive z direction) within the hinge 100 to eliminate the gap.

FIG. 8 is a detailed view of the gear set 130 of the example hinge 100. As illustrated in FIG. 8, the gear set 130 includes the first gear rod 310 and the second gear rod 320. The gear set 130 of the illustrated example of FIG. 8 is a helix gear set, which includes a first gear 810, a second gear 820, and a third gear 830. The first and second gear 810, 820 are oriented such that the thread of the first and second gear 810, 820 are facing the z-axis direction. The third gear 830 is oriented such that the thread of the third gear 830 is facing the y-axis direction.

The first and second gear 810, 820 are connected to the first and second gear rod 310, 320 respectively. The first and second gear rod 310, 320 are subsequently connected to the torque mechanism 140, which controls the movement of the gear set 130.

As illustrated in FIG. 8, the first arm 122 is connected to the first gear rod 310, and the second arm is connected to the second gear rod 320. This configuration allows the torque mechanism 140, in controlling the torque applied to the gear set 130, to control the motion of the first pair of rotational arms 120 to maintain the display 710 in the desired orientation (e.g., preventing the display 710 from falling to a fully open (flat) orientation or to the closed orientation). While the examples disclosed herein refer to the gear set 130 as a helix gear set, any other form of gear configuration may be interchangeably used herein to produce the desired result of controlling the motion of the display 710.

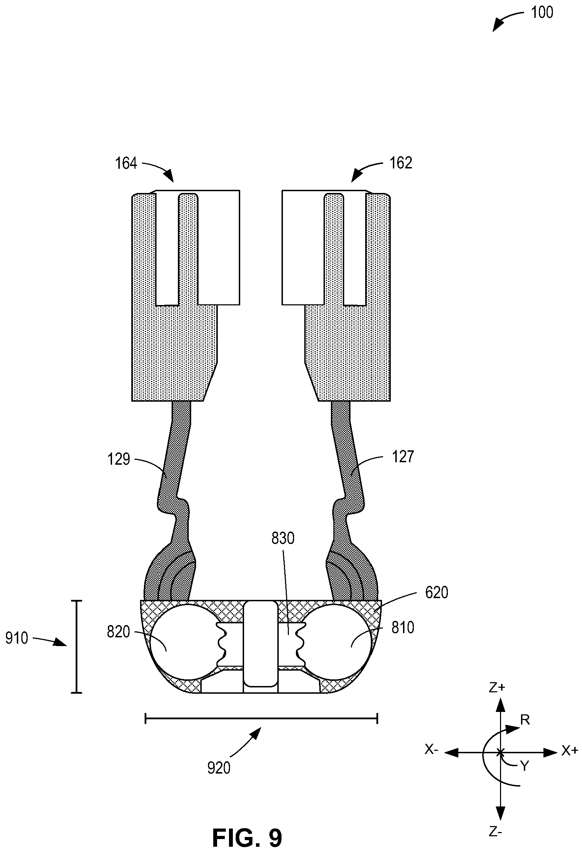

FIG. 9 is a cross-sectional view of the example hinge 100 taken about the A-A line of FIG. 5. As illustrated in FIG. 9, the casing 620 surrounds or houses the first gear 810, the second gear 820, and the third gear 830 to prevent damage to the internal components of the hinge 100. In some examples, depending on the weight and size dimensions of the electronic device, the gear set 130 may be larger or smaller to meet those dimensions. As such, the casing 620, the first pair of rotational arms 120 (e.g., the first arm 122 and the second arm 124), and the gear set 130 may be re-sized as such to accommodate those dimensions. As such, a height 910 of the casing 620 and a depth 920 of the casing 620 may be different depending on the size, weight, dimensions, etc. of the type of electronic device into which the hinge 100 is incorporated. In some examples, a laptop may have a hinge cavity (e.g., a gap in the chassis to accommodate the hinge 100 so the display 710 is flush with the chassis when the electronic device is in the opened orientation) with a height of less than 5 millimeters (mm) and a depth of less than 40 mm. In such an example, the casing 620, and components housed within the casing 620 are sized to fit within the hinge cavity by having the height 910 and the depth 920 be smaller than the height and depth of the hinge cavity.

Additionally, the dimensions of the first pair of rotational arms 120 and the dimensions of the second pair of rotational arms 125 are changeable depending on the weight, size, and/or dimensions of the electronic device into which the hinge 100 is incorporated. In addition, the material of the first pair of rotational arms 120 is also changeable based on the weight, size, and/or dimensions of the electronic device. In some examples, a relatively stronger material is used for the first pair of rotations arms 120 and/or the second pair of rotational arms 125 for a relatively heavier electronic device to be able to withstand the torque forces applied by the display 710 to prevent motion while the display 710 is in the use position. In some examples, the materials of the first pair of rotations arms 120 and/or the second pair of rotational arms 125 include aluminum and/or plastic for relatively lighter electronic devices. In some examples, the materials of the first pair of rotations arms 120 and/or the second pair of rotational arms 125 include titanium for relatively heavier electronic devices. In other examples, other materials and/or combinations of materials may be used herein for the first and second pair of rotational arms 120, 125 based on the weight, size, and/or dimensions of the electronic device.

FIG. 10 is a close-up view of the sliding mechanism 160 included in the example hinge 100. When the electronic device is moved between the open orientation and the closed orientation, the display 710 changes in length with respect to the hinge 100, and the hinge 100 accounts for that length change with the sliding mechanism, 160. In the illustrated example, the sliding mechanism 160 includes the hinge connection component 350, the chassis connection component 360, a first guide set connection point 1010, a first arm pair connection slot 1020, and a spring 1030.

In some examples, the hinge connection component 350 connects to the first guide set 110 via the first guide set connection point 1010 and to the first pair of rotational arms 120 via the first arm pair connection slot 1020. The hinge connection component 350 allows the sliding mechanism 160 to move relative to the first pair of rotational arms 120, which in turn allows the sliding mechanism to move relative to the casing 620. In some examples, the casing 620 is permanently affixed to the hinge cavity of the electronic device.

In some examples, the hinge connection component 350 also includes a second guide set connection point 1015 and a second arm pair connection slot 1025. In such an example, the hinge connection component 350 connects to the second guide set 210 via the second guide set connection point 1015 and to the second pair of rotational arms 125 via the second arm pair connection slot 1025.

The chassis connection component 360 is coupled to the hinge connection component 350. The chassis connection component 360 is also coupled to the chassis of the electronic device, and thus moves with the chassis as the electronic device is opened or closed. The chassis connection component 360 is movable while coupled to the hinge connection component 350, allowing relative motion between the chassis and the hinge 100. Therefore, the display 710 can change in length without the display 710 bunching or creasing at the fold point.

The spring 1030 provides a force to the display 710 when the electronic device is opened or closed. The spring can be pre-compressed or pre-tensed when installed in the electronic device to provide a compressive force or a tensile force to the display 710 when the electronic device is in the opened orientation. In the closed orientation, the sliding mechanism 160 can provide the compressive force to a top portion of the display 710 (e.g., the positive z-direction of the display 710 or the exterior of the display 710 facing a user) and the tensile force to a bottom portion of the display 710 (e.g., the negative z-direction of the display 710 or the interior of the display 710 facing the inside of the chassis).

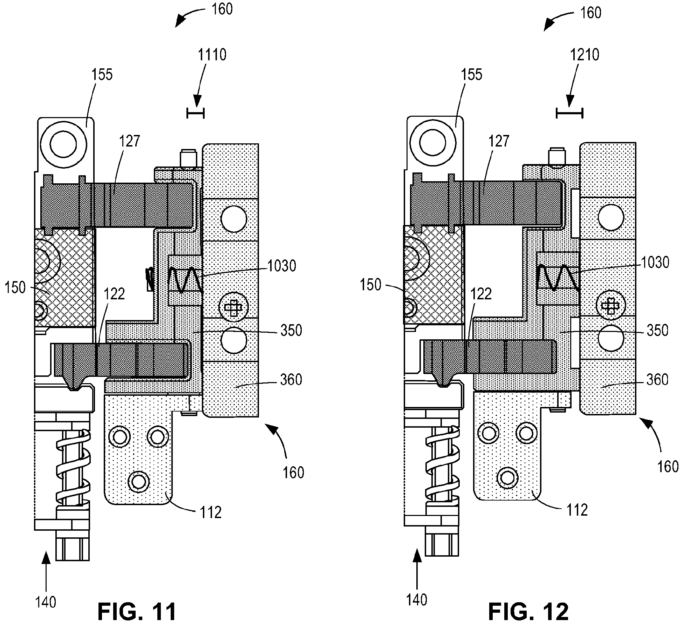

FIG. 11 shows the sliding mechanism 160 in the opened orientation while attached to half of the hinge 100 (e.g., the positive x-axis side). FIG. 12 shows the sliding mechanism 160 in the closed orientation while attached to half of the hinge 100 (e.g., the positive x-axis side). As illustrated in FIG. 11, when the electronic device is in the closed orientation, the sliding mechanism 160 has a first distance 1110 between the first arm 122 and the chassis connection component 360. In such an orientation, the sliding mechanism 160 can provide a tensile force on the display 710 by moving the chassis closer to the hinge 100. In other examples, the sliding mechanism 160 can be adjusted (e.g., by adjusting the force provided by the spring 1030) to provide a compressive force on the display 710 instead by moving the chassis further from the hinge 100.

As illustrated in FIG. 12, when the electronic device is in the opened orientation, the sliding mechanism 160 has a second distance 1210 between the first arm 122 and the chassis connection component 360, the second distance 1210 being larger than the first distance 1110. In such an orientation, the sliding mechanism 160 can provide a tensile force on the bottom portion (e.g., the negative z-direction of the display 710) of the display 710 and a compressive force on the top portion (e.g., the positive z-direction of the display 710) of the display 710, as mentioned in reference to FIG. 10.

FIG. 13 shows an example configuration using more than one hinge 100. In some examples, such as for example, with relatively heavier electronic devices, more than one hinge 100 is used for the torque mechanism 140 to support the weight to maintain the display 710 in the desired position (e.g., open, partially, open, or closed). In such an example, the hinge 100 can be flipped about the x-axis and can connect with a separate hinge 100 to create a pair of hinges. In these examples, multiple hinges can be beneficial in the middle of the display 710 (e.g., midway along the width of the display 710) where torque forces are greatest because of the amount of material on either lateral side of the hinge 100. However, more than one hinge 100 can be used anywhere throughout the width of the display 710.

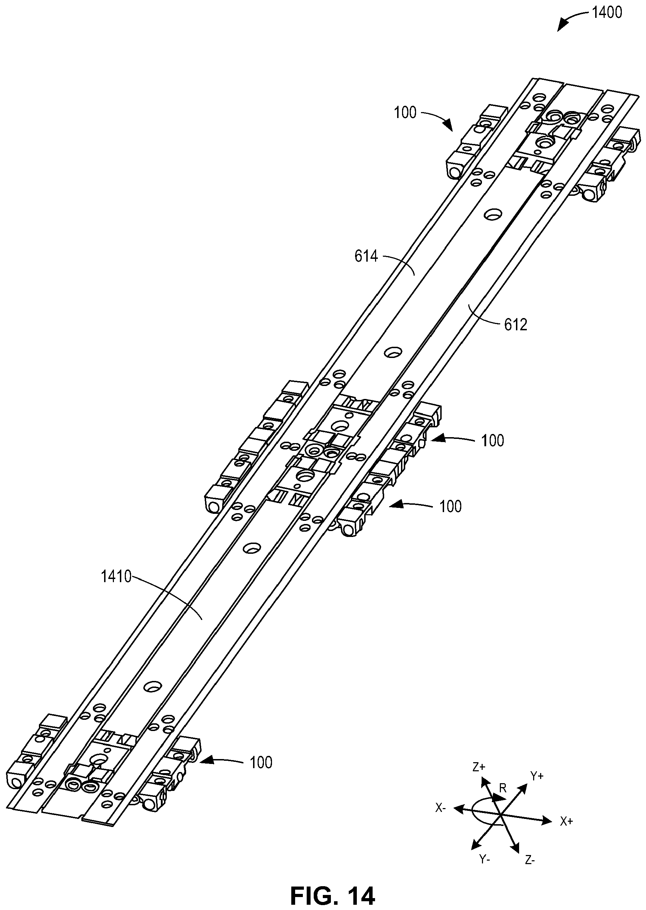

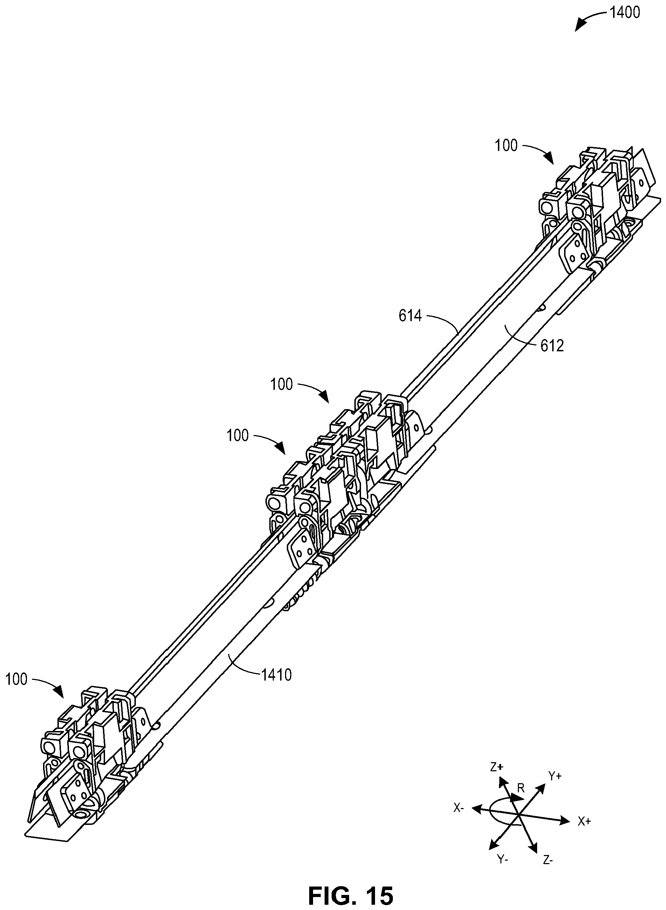

FIG. 14 and FIG. 15 show an electronic device hinge assembly 1400 distributed across the width of an electronic device in the opened orientation and closed orientation respectively. As illustrated in FIG. 14, the electronic device hinge assembly 1400 includes four hinges (e.g., the hinge 100), with two hinges at or near the center point along the depth of the electronic device and one hinge at each respective lateral end of the electronic device hinge assembly 1400. The electronic device hinge assembly 1400 also includes the first extension guide 612, the second extension guide 614, and a third extension guide 1410. As disclosed above, the first extension guide 612 is coupled to the first guide 112 (and the third guide 212 in some examples), and the second extension guide 614 is coupled to the second guide 114 (and the fourth guide 214 in some examples) to guide the display 710 into the waterdrop shape when the electronic device is in the closed orientation. In some examples, the electronic device hinge assembly 1400 also includes a third extension guide 1410 coupled to the casing 620 (e.g., in the positive z-axis direction) to prevent the display 710 from contacting with the internal hinge components at the fold of the display 710. In some examples, the third extension guide 1410 also provides structural stability to the electronic device hinge assembly 1400 by increasing rigidity of the electronic device hinge assembly 1400.

FIG. 15 shows the electronic device hinge assembly 1400 in the closed orientation. As disclosed above, the first extension guide 612 is carried into proximity with the second extension guide 614 by being coupled to the first guide 112 and the second guide 114 respectively, where the first guide 112 and the second guide 114 rotate along the rotational direction to fold the display 710.

FIG. 16 and FIG. 17 show an assembled electronic device 1600 using the hinge 100 in the opened orientation and the closed orientation respectively. As illustrated in FIG. 16, the first housing 1610 and the second housing 1620 (collectively, the chassis) are coupled to the hinge 100, and the display 710 is coupled to both the first housing 1610 and the second housing 1620. When in the opened orientation, the electronic device has an opened height 1630 substantially equal to the height of the chassis (e.g., the first housing 1610 and the second housing 1620) and the display 710.

FIG. 17 shows the assembled electronic device 1600 in the closed orientation. As illustrated in FIG. 17, the assembled electronic device 1600 has a closed height 1710 when in the closed orientation. The closed height 1710 is substantially equal to twice the opened height 1630. In some examples, as disclosed above in reference to FIG. 7, there may exist a small, but negligible display separation distance 720 present in the assembled electronic device 1600. In some examples, the display separation distance 720 is substantially zero due to the waterdrop shape of the fold of the electronic device 1600.

When the display is in the closed orientation, the display separation distance 720 remains constant until the fold, i.e., from the ends of the display towards the fold/hinge 100. The waterdrop shape beings at a fold region 1715. The waterdrop shape has a folded height 1720 of substantially equal to twice the radius 730 as disclosed in reference to FIG. 7.

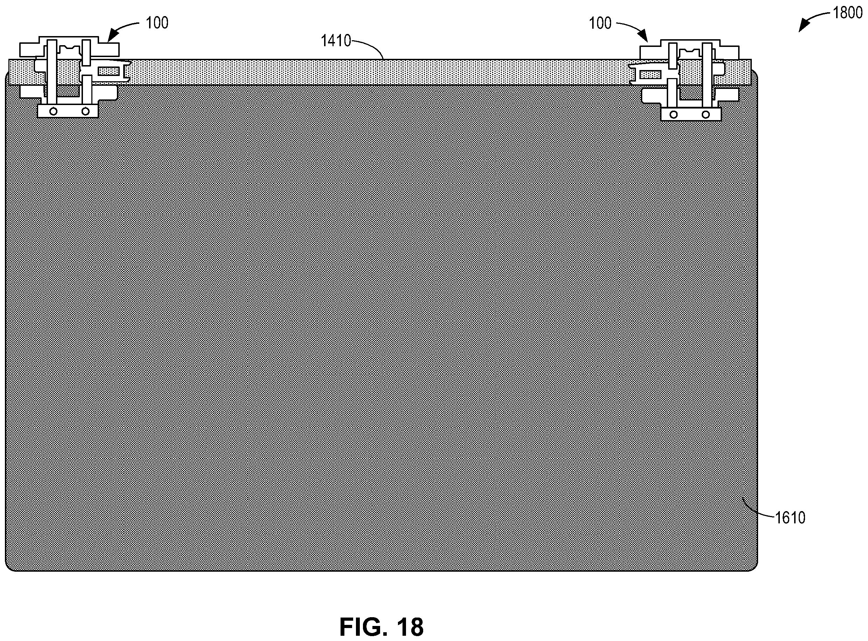

FIG. 18 shows a portion of an alternative electronic device 1800 that includes the hinge 100. As shown in the illustrated example of FIG. 18, the electronic device 1800 includes two hinges (e.g., the hinge 100) as opposed to the four hinges of the electronic device 1600 of FIGS. 16 and 17. In some examples, the weight, size, and/or dimensions of the electronic device allows for the use of fewer hinges 100. For example, a relatively lighter electronic device may use fewer hinges 100. Any other combination of hinges could be used herein, which may include using as few as one hinge 100 or more than four of the hinges 100.

From the foregoing, it will be appreciated that example systems, methods, apparatus, and articles of manufacture have been disclosed that provides a hinge for an electronic device that reduces a gap between two halves of a display when in a closed orientation by utilizing a waterdrop cross-sectional shape.

Example methods, apparatus, systems, and articles of manufacture to a hinge for a foldable electronic device are disclosed herein. Further examples and combinations thereof include the following:
Example 1 includes a foldable electronic device comprising a chassis, the chassis having a first housing and a second housing, a display coupled to both the first housing and the second housing, and a hinge coupling the first housing and the second housing, the hinge including a gear set, a first pair of rotational arms coupled to the gear set, a second pair of rotational arms, a first guide set coupled to the display and to the first pair of rotational arms, the first guide set having a first guide on a first side of the gear set and a second guide on a second side of the gear set, the second side opposite the first side, and a second guide set coupled to the display and to the second pair of rotational arms, the second guide set having a third guide on the first side of the gear set and a fourth guide on the second side of the gear set, wherein the gear set is to rotate the first pair and second pair of rotational arms and the first and second guides to move the foldable electronic device between an opened orientation into a closed orientation, the first and second pair of rotational arms to bring the first guide into proximity with the second guide and the third guide into proximity with the fourth guide in the closed orientation to cause the display to have a waterdrop cross-sectional shape in the closed orientation.
Example 2 includes the foldable electronic device of example 1, wherein the hinge further includes an extension guide extending across a width of the display, the extension guide coupled to the first guide and the third guide on the first side of the gear set and to the second guide and the fourth guide on the second side of the gear set.
Example 3 includes the foldable electronic device of example 1, wherein the hinge further includes a sliding mechanism coupled to the chassis, the sliding mechanism to modify a force applied to the display when in both the opened orientation and the closed orientation.
Example 4 includes the foldable electronic device of example 3, wherein the sliding mechanism is in a first position when in the opened orientation, the first position to provide a tensile force on the display by moving the chassis closer to the hinge.
Example 5 includes the foldable electronic device of example 4, wherein the sliding mechanism is in a second position when in the closed orientation, the second position to provide a compressive force on the display by moving the chassis further from the hinge.
Example 6 includes the foldable electronic device of example 1, further including a plurality of hinges distributed along a width of the foldable electronic device between the first housing and the second housing, the plurality of hinges coupled to the display and the chassis.
Example 7 includes the foldable electronic device of example 1, wherein a first end of the first housing is separated from a first end of the second housing by a first distance in the closed orientation, a second end of the first housing is separated from a second end of the second housing by the first distance in the closed orientation, a first end of a display is separated from a second end of the display by a second distance in the closed orientation, a first middle portion of the display on the first side of the hinge separated from a second middle portion of the display on the second side of the hinge by a third distance, the third distance greater than the first distance.
Example 8 includes a hinge for a foldable portable electronic device, the hinge comprising a gear set having an axis of rotation, a first pair of rotational arms coupled to the gear set, and a first guide set coupled to the first pair of rotational arms and couplable to a display of the foldable portable electronic device, the first guide set having a first guide on a first side of the axis of rotation and a second guide on a second side of the axis of rotation, wherein the gear set is to rotate the first pair of rotational arms and the first guide set about the axis of rotation to move the foldable portable electronic device between an opened orientation and a closed orientation, the first guide and the second guide angled relative to each other in the closed orientation to cause a first end of the display and a second end of the display to be separated a first distance and a middle portion of the display to define a gap of a second distance greater than the first distance.
Example 9 includes the hinge of example 8, further including a second pair of rotational arms.
Example 10 includes the hinge of example 9, further including a second guide set coupled to the second pair of rotational arms and couplable to a display of the foldable portable electronic device, the second guide set having a third guide on the first side of the axis of rotation and a fourth guide on the second side of the axis of rotation.
Example 11 includes the hinge of example 10, wherein the gear set is further to rotate the second pair of rotational arms and the second guide set about the axis of rotation to move the foldable portable electronic device between the opened orientation and the closed orientation, the third guide and the fourth guide angled relative to each other in the closed orientation to cause the first end of the display and the second end of the display to be separated the first distance and the middle portion of the display to define the gap of the second distance greater than the first distance.
Example 12 includes the hinge of example 8, wherein the gear set is to cause the foldable portable electronic device to have a first thickness in the opened orientation and a second thickness in the closed orientation, the second thickness greater than the first thickness, the second thickness substantially uniform.
Example 13 includes the hinge of example 8, further including a sliding mechanism to modify a force applied to the display between the opened orientation and the closed orientation.
Example 14 includes the hinge of example 13, wherein the sliding mechanism provides a compressive force to a top portion of the display and a tensile force to a bottom portion of the display in the closed orientation.
Example 15 includes the hinge of example 13, wherein the sliding mechanism is to provide a tensile force to a top of the display in the opened orientation.
Example 16 includes an apparatus for an electronic device comprising a gear set, a first pair of rotational arms coupled to the gear set, and a first guide set carried by the first pair of rotational arms and couplable to a display of the electronic device, the first guide set having a first guide on a first side of the gear set and a second guide on a second side of the gear set, the second side opposite the first side, wherein the gear set is to rotate the first pair of rotational arms to move the electronic device between an opened orientation and a closed orientation, the first pair of rotational arms to bring the first guide of the first guide set into proximity with the second guide of the first guide set in the closed orientation to cause the display to have a waterdrop cross-sectional shape in the closed orientation.
Example 17 includes the apparatus of example 16, further including a second pair of rotational arms.
Example 18 includes the apparatus of example 17, further including a second guide set carried by the second pair of rotational arms and couplable to the display of the electronic device, the second guide set having a third guide on the first side of the gear set and a fourth guide on the second side of the gear set, the fourth guide opposite the third guide, the third guide on the first side of the gear set and the fourth guide on the second side of the gear set.
Example 19 includes the apparatus of example 18, wherein the gear set is further to rotate the second pair of rotational arms to move the electronic device between the opened orientation and the closed orientation, the second pair of rotational arms to bring the third guide of the second guide set into proximity with the fourth guide of the second guide set in the closed orientation to cause the display to have a waterdrop cross-sectional shape in the closed orientation.
Example 20 includes the apparatus of example 16, further including a torque mechanism coupled to the gear set.
Example 21 includes the apparatus of example 16, further including a sliding mechanism to modify a force applied to the display between the opened orientation and the closed orientation.
Example 22 includes the apparatus of example 21, wherein the sliding mechanism is to provide a compressive force to a top portion of the display and a tensile force to a bottom portion of the display in the closed orientation.
Example 23 includes the apparatus of example 21, wherein the sliding mechanism is to provide a tensile force to a top of the display in the opened orientation.
Example 24 includes the apparatus of example 21, wherein the sliding mechanism is to provide a compressive force to a top of the display in the opened orientation.
Example 25 includes the apparatus of example 16, further including a housing having a height corresponding to a height of a hinge cavity in the electronic device, and a depth corresponding to a depth of the hinge cavity in the electronic device.
Example 26 includes a hinge for a foldable electronic device, the hinge comprising means for guiding a display of the foldable electronic device between an opened orientation and a closed orientation, means for rotating the guiding means about an axis of rotation, and means for changing a force applied to the display as the display is guided between the opened orientation and the closed orientation, wherein the force changing means is operatively coupled to the rotating means, and wherein in the closed orientation, the guiding means causes the display to have a waterdrop cross-sectional shape.
Example 27 includes the hinge of example 26, further including means for passively stopping the rotating means.
Example 28 includes the hinge of example 26, further including means for connecting more than one hinge together.

The following claims are hereby incorporated into this Detailed Description by this reference. Although certain example systems, methods, apparatus, and articles of manufacture have been disclosed herein, the scope of coverage of this patent is not limited thereto. On the contrary, this patent covers all systems, methods, apparatus, and articles of manufacture fairly falling within the scope of the claims of this patent.

## Claims

1. An apparatus for an electronic device comprising:
a gear set;
a first pair of rotational arms coupled to the gear set; and
a first guide set carried by the first pair of rotational arms and couplable to a display of the electronic device, the first guide set having a first guide on a first side of the gear set and a second guide on a second side of the gear set, the second side opposite the first side;
wherein the gear set is to rotate the first pair of rotational arms to move the electronic device between an opened orientation and a closed orientation, the first pair of rotational arms to bring the first guide of the first guide set into proximity with the second guide of the first guide set in the closed orientation to cause the display to have a waterdrop cross-sectional shape in the closed orientation.

2. The apparatus of claim 1, further including a second pair of rotational arms.

3. The apparatus of claim 2, further including a second guide set carried by the second pair of rotational arms and couplable to the display of the electronic device, the second guide set having a third guide on the first side of the gear set and a fourth guide on the second side of the gear set, the fourth guide opposite the third guide, the third guide on the first side of the gear set and the fourth guide on the second side of the gear set.

4. The apparatus of claim 3, wherein the gear set is further to rotate the second pair of rotational arms to move the electronic device between the opened orientation and the closed orientation, the second pair of rotational arms to bring the third guide of the second guide set into proximity with the fourth guide of the second guide set in the closed orientation to cause the display to have a waterdrop cross-sectional shape in the closed orientation.

5. The apparatus of any of claims 1-4, further including a torque mechanism coupled to the gear set.

6. The apparatus of claim 5, wherein the torque mechanism is to passively stop the rotation of the first pair of rotational arms and the second pair of rotational arms.

7. The apparatus of any of claims 1-6, further including a sliding mechanism to modify a force applied to the display between the opened orientation and the closed orientation.

8. The apparatus of claim 7, wherein the sliding mechanism is to provide a compressive force to a top portion of the display and a tensile force to a bottom portion of the display in the closed orientation.

9. The apparatus of any of claims 7-8, wherein the sliding mechanism is to provide a tensile force to a top of the display in the opened orientation.

10. The apparatus of any of claims 7-9, wherein the sliding mechanism is to provide a compressive force to a top of the display in the opened orientation.

11. The apparatus of any of claims 1-10, further including a casing having a height corresponding to a height of a hinge cavity in the electronic device, and a depth corresponding to a depth of the hinge cavity in the electronic device.

12. The apparatus of any of claims 1-11, further including an extension guide extending across a width of the display of the electronic device, the extension guide coupled to the first guide and the third guide on the first side of the gear set and to the second guide and the fourth guide on the second side of the gear set.

13. The apparatus of any of claims 1-12, wherein the gear set is to cause the electronic device to have a first thickness in the opened orientation and a second thickness in the closed orientation, the second thickness greater than the first thickness, the second thickness substantially uniform.

14. The apparatus of any of claims 1-13, further including a plurality of gear sets, a plurality of the first pair of rotational arms, and a plurality of first guide sets distributed along a width of the electronic device.

15. The apparatus of claim 14, wherein the extension guide couples the plurality of gear sets, the plurality of the first pair of rotational arms, and the plurality of first guide sets together along the width of the electronic device.
